# EUROPÄISCHE PATENTSCHRIFT

(11) **EP 4 070 891 B1**
(45) Veröffentlichungstag und Bekanntmachung des Hinweises auf die Patenterteilung: **01.04.2026**
(21) Anmeldenummer: 22156684.7
(22) Anmeldetag: 15.02.2022
(51) Int. Cl.: B05C 17/005, B65D 83/76

(54) **NACHLAUFENDER KOLBEN MIT STÜTZLIPPE**
TRAILING PISTON WITH SUPPORT LIP
PISTON SUIVEUR À LÈVRE D'APPUI

(30) Priorität: 07.04.2021 DE 102021108642
(43) Veröffentlichungstag der Anmeldung: 12.10.2022
(73) Patentinhaber: Ritter GmbH, 86830 Schwabmünchen (DE)
(72) Erfinder: Schatz, Stephan, 88175 Scheidegg (DE); Kertzscher, Sebastian, 86836 Lagerlechfeld (DE); Wolf, Oliver, 86836 Untermeitingen (DE); Finis, Frank, 86199 Augsburg (DE)
(74) Vertreter: Lermer, Christoph

(56) Entgegenhaltungen:
- DE-A1- 102010 048 062
- DE-A1- 102017 203 241
- DE-U1- 202008 005 097
- DE-U1- 202018 003 641

## Beschreibung

### TECHNISCHES GEBIET

Die Anmeldung betrifft einen Verschluss- und Ausdrückkolben zum Einsatz in den Innenraum einer Kartusche, umfassend eine Kolbenplatte zum Kontakt mit einer in den Innenraum der Kartusche eigebrachten pastösen oder flüssigen Füllsubstanz, eine sich an die Kolbenplatte rückseitig anschließende Schürze, sowie eine vordere Lamelle, die sich in einer Länge von der Schürze nach vorne erstreckt, um einen Zwischenraum zwischen der vorderen Lamelle und einem vorderen Abschnitt der Schürze zu bilden, wobei die vordere Lamelle eine Dichtfläche zur Anlage an der Innenseite einer Wand der Kartusche aufweist.

### STAND DER TECHNIK

Konventionelle Verschluss- und Ausdrückkolben für Kartuschen bestehen aus einer sich über den Kartuschenquerschnitt erstreckenden Kolbenplatte und einer sich rückwärts daran anschließenden zylindrischen Schürze. Am Außenumfang des Kolbens ist eine Dichtlippen ausgebildet, die mit der Kartuscheninnenwand zusammenwirkt. Beispielsweise kann am vorderen Bereich des Kolbens eine nach vorne weisende Dichtlippe vorgesehen sein, die bei zunehmendem Auspressdruck durch den Gegendruck des Füllmaterials stärker an die Kartuscheninnenwand angedrückt wird, sodass die Abdichtung sich selbsttätig verstärkt und eine bessere Abdichtung erzielt wird. Darüber hinaus können eine oder mehrere axial beabstandete, nach rückwärts weisende Dichtlippen vorgesehen sein. Ein derartiger Kolben ist z.B. aus der Patentschrift EP 2 520 375 B1 bekannt.

Als problematisch bei derartigen Konstruktionen kann sich das Einsetzen des Kolbens in das offene hintere Kartuschenende erweisen. Insbesondere wenn der Kolben nicht ganz exakt zentrisch angesetzt wird, kann sich die nach vorne weisende Dichtlippe mit der rückwärtigen Kante der Kartuschenwand verhaken. Außerdem kann der Kolben während der Einsetzbewegung verkippen und an der Kartuschenwand verhaken. Dies kann zu Störungen beim Setzvorgang sowie zu Beschädigungen der Dichtlippe führen, wodurch die Abdichtung des Kolbens an der Kartuschenwand unzureichend ist und das in die Kartusche eingefüllte Füllmaterial mit eindringender Luft reagieren kann.

In der Regel werden die Kolben in eine Kartusche durch mechanische Kraft oder durch Druckluft (hydraulisch) eingesetzt und zum Ausbringen des Füllmaterials mechanisch oder durch Druckluft (hydraulisch) beaufschlagt, z.B. mittels einer Ausbringpistole. Während des Setzvorgangs erhöht sich der Druck innerhalb der Füllsubstanz. Die Kartusche kann sich entsprechend verformen. Bei Beendigung des Ausbringvorgangs wird der Kolben entlastet. Das Füllmaterial dehnt sich aus und die Kartusche verformt sich zurück. Da die Füllmasse im Bereich des Kolbens durch diesen blockiert ist, fließt weitere Füllmasse aus der Kartuschenöffnung nach außen aus. Neben diesem unerwünschten Effekt kann Luft von der Rückseite der Kartusche zwischen der Innenwand der Kartusche und der Dichtlippe hindurch in den Innenraum der Kartusche dringen. Die Füllmasse kann dann im Bereich des Kolbens mit der eindringenden Luft oder Wasserdampf reagieren und verhärten.

Die Druckschrift DE 10 2017 203 241 A1 offenbart einen einstückigen Kolben zum Auspressen von Masse aus einer Kartusche mit einer vorne abstehenden Dichtlippe, einer zweiten hinteren Dichtlippe, und einer sich im hinteren Bereich der Schürze erstreckende Dichtlippe.

Die Druckschrift DE 20 2008 005 097 U1 zeigt einen einstückigen Kartuschenkolben zum Auspressen von Masse aus einer Kartusche mit einem vorderen Schutzrand 30 zur Erleichterung des Einführens des Kolbens in die Kartusche.

Die Druckschrift DE 20 2018 003 641 U1 zeigt einen Kartuschenkolben zum Auspressen viskoser Massen aus einer Kartusche. AN einer Deckwand des Kolbens ist ein Kranz radialer Rippen angeordnet.

Die Druckschrift DE 10 2010 048 062 A1 offenbart einen weiteren Kartuschenkolben mit einer nach vorne gerichteten elastischen Dichtlippe, wobei an der Dichtlippe Luftdurchlässe ausgebildet sind, die ein Entweichen der Luft beim Setzen des Kolbens erlauben.

### AUFGABE DER ERFINDUNG

Es ist die Aufgabe der Erfindung, einen Verschluss- und Ausdrückkolben für Kartuschen für Füllsubstanzen bereitzustellen, der eine gute Zentrierung und Führung der Kolbenbewegung erlaubt und ein unerwünschtes Nachfließen von Füllsubstanz aus der Kartuschenöffnung bei einer Unterbrechung des Ausbringvorgangs verhindert.

### TECHNISCHE LÖSUNG

Die Aufgabe wird durch einen Verschluss- und Ausdrückkolben für Kartuschen für Füllsubstanzen, z.B. für plastische Massen, nach Anspruch 1 gelöst. Vorteilhafte Ausführungsformen ergeben sich aus den Merkmalen der abhängigen Ansprüche.

Ein erfindungsgemäßer Verschluss- und Ausdrückkolben zum Einsatz in den Innenraum einer Kartusche, umfasst eine Kolbenplatte zum Kontakt mit einer in den Innenraum der Kartusche eigebrachten pastösen oder flüssigen Füllsubstanz, eine sich an die Kolbenplatte rückseitig anschließende Schürze, eine vordere Lamelle, die sich in einer Länge von der Schürze nach vorne erstreckt, um einen Zwischenraum zwischen der vorderen Lamelle und einem vorderen Abschnitt der Schürze zu bilden, wobei die vordere Lamelle eine Dichtfläche zur Anlage an der Innenseite einer Wand der Kartusche aufweist, wobei die Dichtfläche zum Abdichten zwischen der Innenseite der Wand der Kartusche und dem Kolben elastisch an der Innenseite der Wand anliegt, um die Füllsubstanz am Durchtritt durch den Bereich zwischen der vorderen Lamelle und der Innenseite der Wand zu hindern. Der Kolben weist wenigstens eine erste hintere Dichtung auf, die sich im Bereich eines hinteren Endes der Schürze erstreckt oder vom hinteren Ende der Schürze gebildet ist. Die erste hintere Dichtung liegt zum Abdichten zwischen der Innenseite der Wand der Kartusche elastisch an dieser an, und ist derart ausgebildet, dass sie bei Beaufschlagung mit Luft von der Rückseite des Kolbens her selbsttätig nach außen gedrückt wird. Der Kolben weist außerdem wenigstens eine zweite hintere Dichtung auf, die sich vorderseitig in einem Abstand x vom hinteren Ende der Schürze erstreckt, wobei die zweite hintere Dichtung zum Abdichten zwischen der Innenseite der Wand der Kartusche elastisch an dieser anliegt, und derart ausgebildet ist, dass sie bei Beaufschlagung mit Luft von der Rückseite des Kolbens her selbsttätig nach außen gedrückt wird. Die vordere Lamelle weist einen Lamellenrand auf, von dem sich mehrere der Kolbenachse zugewandte Vorsprünge erstrecken, die nach vorne über das vordere Ende der vorderen Lamelle überstehen und jeweils eine radial auswärts weisende, schräg rückwärts verlaufende und in den Lamellenrand übergehende Rampenfläche bilden. Die vordere Lamelle ist derart elastisch ausgebildet und/oder gelagert, dass sich der Kolben bei Überschreiten oder Unterschreiten eines durch Ausdehnung, Schrumpfen oder Bewegung der Füllsubstanz gebildeten Über- bzw. Unterdrucks entlang der Wand der Kartusche selbsttätig nach hinten bzw. nach vorne bewegt.

Man kann den Kolben als "nachlaufenden" Kolben ansehen, der sich selbsttätig an die Druckverhältnissen im eingeschlossenen Füllmaterial anpasst und Druckänderungen ausgleicht. Dieser Effekt wird unter anderem durch die hohe Gleitfähigkeit und die Anordnung mehrerer Dichtlippen sowie deren Elastizität erreicht. So können über die Höhe des Kolbens verteilt beispielsweise drei bis fünf Dichtungen angeordnet sein. Da diese den Kolben auch gegen ein Verkippen abstützen, ohne eine zu hohe Reibung auszuüben, bleibt der Kolben beweglich und verhakt sich nicht an der Kartuscheninnenwand.

Insbesondere ist die vordere Lamelle derart ausgebildet, dass bei Kontakt der Vorderseite des Kobens mit der Füllsubstanz eine nach außen gerichtete Kraft auf die vordere Lamelle ausgeübt wird, sodass diese selbsttätig abdichtet. Dieser Effekt wird durch in den Spalt zwischen Lamelle und Kolbenplatte eindringendes Füllmaterial, das einen zur Kartuschenwand hin gerichteten hydrostatischen Druck auf die Lamelle ausübt, erzielt.

Die Begriffe "vordere", "hintere", rückseitig", "vorderseitig", etc., beziehen sich auf die Bewegungsrichtung des Kobens bei bestimmungsgemäßem Ausbringen der pastösen oder flüssigen Füllsubstanz.

Der Kolben kann zudem wenigstens eine hintere Lamelle aufweisen, die sich von der Schürze nach hinten erstreckt, wobei die hintere Lamelle eine Dichtfläche zur Anlage an der Innenseite einer Wand der Kartusche aufweist, wobei die Dichtfläche zum Abdichten zwischen der Innenseite der Wand der Kartusche und dem Kolben elastisch an der Innenseite der Wand anliegt, um ein Fluid, wie insbesondere Luft oder Gas, am Durchtritt von der rückwärtigen Seite des Kolbens her zwischen der hinteren Lamelle und der Innenseite der Wand zu hindern, wobei die hintere Lamelle derart ausgebildet ist, dass sie bei Beaufschlagung mit dem Fluid von der Rückseite des Kolbens her selbsttätig nach außen gedrückt wird.

Die Schürze ist insbesondere im Wesentlichen hohlzylindrisch ausgebildet, und/oder der Kolben ist zum Einsetzen in einen im Wesentlichen zylindrischem Innenraum einer Kartusche ausgebildet.

Die schrägen Rampenflächen zentrieren den Kolben beim Einsetzen in die Kartusche, d.h. der Kolben zentriert sich selbsttätig. Der Begriff "radial" umfasst auch Flächen mit radialer Komponente.

Wenigstens einer der Vorsprünge kann ein inneres Ende aufweisen, das in einem Abstand von der Schürze endet, um einen Zwischenraum zwischen der Schürze und dem Ende des Vorsprungs zu bilden. Auf diese Weise wird die Flexibilität und Elastizität der Lamelle gewährleistet. Die Elastizität der Lamelle wird nicht durch einen Verbindungssteg zwischen der Lamelle und der Kolbenplatte reduziert.

Die Vorsprünge sind so ausgebildet, dass sie die elastische Beweglichkeit und Anschmiegsamkeit der Lamelle nicht behindern. Gleichzeitig wird zuverlässig verhindert, dass das rückwärtige Ende der Kartuschenwand zwischen die Lamelle und die Kolbenplatte gerät. Die Vorsprünge können äquidistant oder in unterschiedlichen Abständen in Umfangsrichtung angeordnet sein.

In einer besonders bevorzugten Ausführungsform der Erfindung wird Wachs verwendet, um die Gleitfähigkeit des Kolbens innerhalb der Kartusche zu erhöhen. Dazu kann die Spitze der vorderen Lamelle derart ausgebildet bzw. profiliert sein, dass zwischen der Spitze der Lamelle und der Innenseite der Kartuschenwand ein Spalt entsteht, der als Reservoir für Wachs oder ein anderes Schmiermittel dienen kann.

Beim erstmaligen Einsetzen des Kolbens in die Kartusche muss der Raum zwischen der Füllmasse und der Kolbenplatte entlüftet werden. Dies kann durch alle möglichen im Stand der Technik bekannten Entlüftungs- oder Ventilöffnungen erfolgen.

Es ist auch möglich, dass die Entlüftung durch einen zwischen der Kartuschenwand und den Dichtlippen des Kolbens durch Verformung des Kolbens beim Setzen erzeugten Spalt erfolgt. So kann der Kolben sich rückseitig erstreckende Rippen aufweisen, die asymmetrisch angeordnet sind. Ein Setzstempel kann so an die Rippen angreifen, dass sich der Kolben beim Setzen asymmetrisch verformt und so eine Entlüftung an bestimmten Stellen des Umfangs ermöglicht. Nach Beendigung des Setzvorgangs entspannt sich der Kolben und nimmt seine ursprüngliche runde Form wieder an. Durch die erfindungsgemäße Konstruktion mit einer Reihe über die Höhe des Kolbens beabstandeter Dichtlippen, die den Kolben in seiner Lage an der Kartuschenwand stabilisieren, wird eine möglicherweise verbleibende "Unrundheit" des Kolbens ausgeglichen.

Beispielsweise kann die die Kolbenplatte an ihrer Rückseite einen inneren, etwa zylindrisch zurückspringenden Ringansatz aufweisen, an dem beim Einsetzen des Kolbens in das hintere Kartuschenende das Setzwerkzeug mit seinem axialen Pressdruck angreift. Darüber hinaus ist ein schräg rückwärts und einwärts verlaufender Ringansatz am Bereich der Kolbenplattenrückseite gebildet, an dem beim Ausdrücken der Kartusche der Setzstempel angreift.

Sitzt der Kolben hingegen zu stramm, kann sich außerdem der Kolben nicht ausreichend in Richtung der eingefüllten Substanz verschieben, wenn sich beispielsweise die Füllsubstanz abkühlt, schrumpft und sich das eingeschlossene Volumen dadurch verringert. Die Folge des Schrumpfens ist dann, dass sich der Behälter einwölbt. Dies wird durch die erfindungsgemäße

### KURZE BESCHREIBUNG DER FIGUREN

Weitere Merkmale und Vorteile der Erfindung werden aus der nachfolgenden Beschreibung bevorzugter Ausführungsbeispiele anhand der Figuren deutlich. Es zeigen:
- Figur 1: Eine perspektivische Darstellung einer Ausführungsform des erfindungsgemäßen Kolbens;
- Figur 2: Eine Seitenansicht der Ausführungsform des erfindungsgemäßen Kolbens;
- Figur 3: Einen Ausschnitt aus Figur 2;
- Figur 4: Einen Abschnitt des erfindungsgemäßen Kolbens in einer Schnittdarstellung;
- Figur 5: Ein Detail aus Figur 4; und
- Figur 6: Einen weiteren Abschnitt des erfindungsgemäßen Kolbens in einer Schnittdarstellung.

### BESCHREIBUNG EINES BEVORZUGTEN AUSFÜHRUNGSBEISPIELS

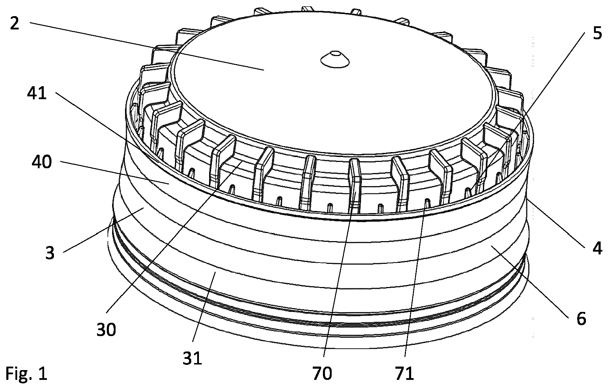

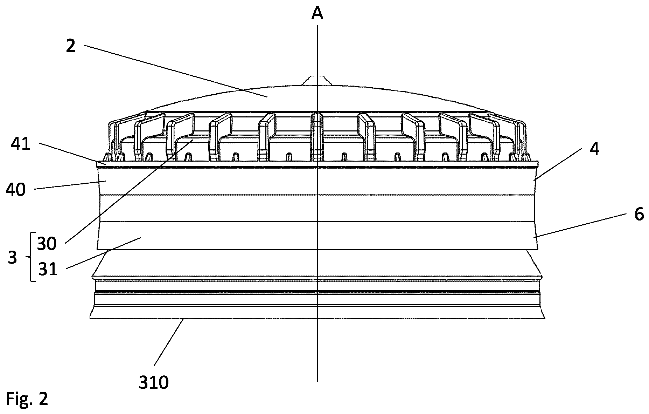

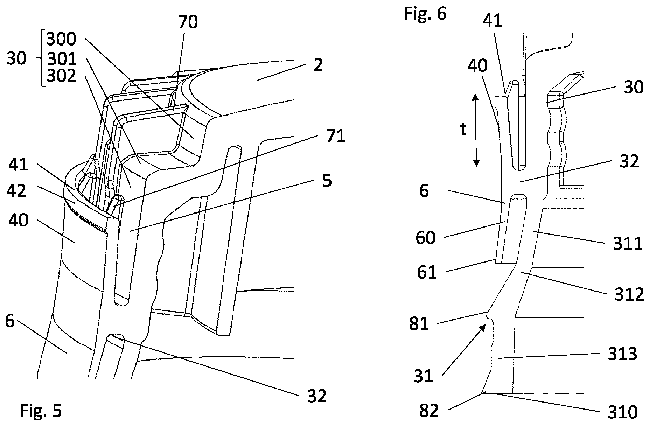

Die Figuren 1 bis 6 zeigen eine Ausführungsform eines erfindungsgemäßen Verschluss- und Ausdrückkolbens 1 in verschiedenen Ansichten.

Der Kolben 1 weist eine gewölbte Kolbenplatte 2 und eine im Wesentlichen zylindrische Schürze 3 auf. Die Schürze 3 schließt sich rückseitig an die Kolbenplatte 2 an, d.h. die Schürze 3 erstreckt sich, von der Kolbenplatte 2 ausgehend, nach hinten. Die Schürze 3 weist einen ersten Abschnitt 30 auf, der sich unmittelbar an die Kolbenplatte 2 anschließt, und einen zweiten Abschnitt 31, der sich an den ersten Abschnitt 30 anschließt, und dessen Ende 310 das hintere Ende des Kolbens 1 bildet.

Der erste Abschnitt 30 der Schürze 3, der sich an die Kolbenplatte 2 anschließt, weist einen ersten axialen Abschnitt 300, eine Stufe 301, die sich vom ersten axialen Abschnitt 300 radial nach außen (d.h. von der zentralen Achse A weg) erstreckt, und einen zweiten axialen Abschnitt 302 auf, der sich zum Übergangsbereich 32 erstreckt. An den Übergangsbereich 32 schließen sich eine vordere Lamelle 4 und eine hintere Lamelle 6 an.

Von einem Übergangsbereich 32 zwischen dem ersten Abschnitt 30 und dem zweiten Abschnitt 31 erstreckt sich die nach vorne ausgerichtete vordere Lamelle 4 mit einem Lamellenkörper 40 und einem vorderen Lamellenrand 41. Die Lamelle 4 kann eine vordere Dichtlippe oder eine Dichtfläche 42 aufweisen, die im Bereich des Lamellenrands 41 oder an der Außenseite des Lamellenkörpers 40, allerdings vorzugsweise im vorderen Bereich desselben, angeordnet ist. Die Lamelle 4 ist derart elastisch ausgebildet und/oder gelagert bzw. mit der Schürze 3 verbunden, dass sie - nach dem Einbringen des Kolbens 1 in einen Innenraum einer Kartusche - eine zur Innenseite der Wand der Kartusche ausgerichtete Kraft ausübt, sodass sich die Dichtlippe oder die Dichtfläche 42 an die Wand anlegt bzw. anpresst, um eine Abdichtung gegenüber der Füllsubstanz zu gewährleisten.

Zwischen dem ersten Abschnitt 30 der Schürze 3 und der Lamelle 4 ist ein Zwischenraum 5 der Tiefe t ausgebildet. In diesen kann Füllsubstanz beim Setzen des Kolbens 1 und/oder beim Ausbringen eindringen und die Lamelle 4 nach außen in Richtung der Innenseite der Kartuschenwand drücken. So kann die Dichtwirkung verstärkt werden.

Außerdem kann die Kontur des Lamellenrands 41 und/oder der Dichtlippe/ Dichtfläche 42 so ausgebildet und geformt sein, dass die Lamelle 4 unter dem Einfluss des von der Füllsubstanz auf sie ausgeübten Drucks mit einer nach außen gerichteten Kraftkomponente nach außen gedrückt wird. So wird die Abdichtung zwischen Kolben 1 und Kartusche gegenüber der Füllsubstanz verbessert. Ein Ausfließen von Füllsubstanz durch einen Spalt zwischen Lamelle 4 und Kartuschenwand wird so verhindert. Da sich die Lamelle 4 beim Setzen des Kolbens 1 in die Kartusche nach außen bewegt bzw. durch Beaufschlagung mit einem Fluid oder mit Füllsubstanz (von vorne her) nach außen gedrückt wird, wirkt die Lamelle 4 selbstdichtend und zugleich selbsttätig zentrierend.

Rückwärtig schließt sich an die vordere Lamelle 4, ebenfalls ausgehend vom Übergangsbereich 32, eine hintere Lamelle 6 an. Die hintere Lamelle 6 weist, analog zur vorderen Lamelle 4, einen Lamellenkörper 60 und einen Lamellenrand 61 auf. Der Lammellenrand 61 bildet bzw. weist eine in Umfangsrichtung ununterbrochen umlaufende Lamellendichtung auf. Die Lamellendichtung 61 wirkt gegen das Eindringen von Luft in den Raum zwischen dem Kolben 1 und einer Wand der Kartusche von der Rückseite des Kolbens 1 her. Da die hintere Lamelle 6 elastisch ausgebildet bzw. elastisch gelagert ist und schräg nach hinten und außen verläuft, wird die Lamellendichtung 61, wenn sie von der Rückseite des Kolbens 1 her mit einem Fluid beaufschlagt wird, nach außen gedrückt und wirkt damit selbstdichtend und zugleich selbsttätig zentrierend.

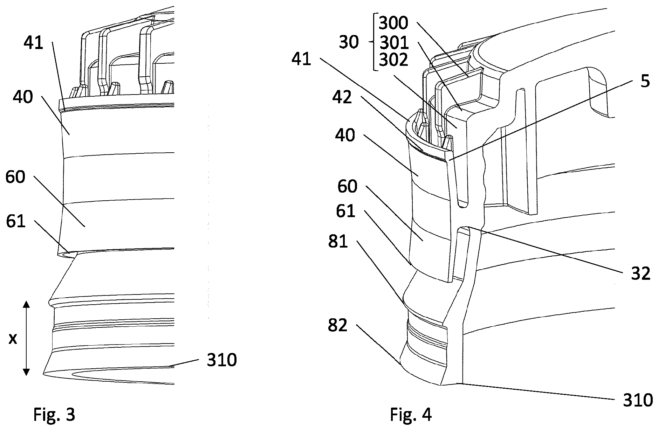

Der vordere Bereich des Kolbens 1 wird, insbesondere im Hinblick auf die Figuren 4 bis 6, genauer beschrieben. Um den Kolben 1 beim Setzen in eine Kartusche zu zentrieren und eine Beschädigung der flexiblen vorderen Lamelle 4 zu verhindern, weist der Kolben zum einen sich von der Kolbenplatte 2 nach außen erstreckende Führungsrippen 70 auf. Diese sind entlang des Umfangs beabstandet zueinander (insbesondere äquidistant) angeordnet. Sie reichen nicht an die vordere Lamelle 4 heran, d.h. es bleibt ein Zwischenraum 5 zwischen den Führungsrippen 70 und der vorderen Lamelle 4 bestehen.

Außerdem weist der Kolben Zentrierrippen 71 auf, die sich vom Rand 41 der vorderen Lamelle nach innen erstrecken. Außerdem weisen sie jeweils eine vorderseitige Rampenfläche auf, die sich - von außen nach innen betrachtet - schräg axial nach vorne erstreckt. Die Zentrierrippen 71 erstrecken sich nach innen, insbesondere radial nach innen. Gegebenenfalls sind sie äquidistant entlang des Umfangs angeordnet. Allerdings reichen sie nicht bis an die Schürze 3 heran, sodass ein Zwischenraum 5 zwischen den inneren Enden der Zentrierrippen 71 und der Schürze 30 verbleibt. Die Zentrierrippen 71 sorgen dafür, dass der Rand einer Kartusche, der beim Setzen des Kolbens 1 auf die Rampenflächen trifft, relativ nach außen abgleitet. Auf diese Weise wird der Kolben 1 zentriert.

Der Zwischenraum 5 sowohl zwischen den Führungsrippen 70 und der Lamelle 4 als auch zwischen den Zentrierrippen 71 und der Schürze 3 sorgt dafür, dass die elastische bzw. elastisch gelagerte Lamelle 4 flexibel bleibt und sowohl die Dichtfunktion durch eine nach außen wirkende Kraft, als auch die Funktion des Nachlaufens des Kolbens 1 bei Veränderungen der Dichte der Füllsubstanz bzw. beim Fließen der Füllsubstanz innerhalb der Kartusche gewährleistet ist.

Der zweite Abschnitt 31 der Schürze 3 weist einen vorderen Abschnitt 311 auf, der sich in etwa parallel zur hinteren Lamelle 6 erstreckt und in etwa zylindrisch ausgebildet ist. Außerdem weist der zweite Abschnitt 31 der Schürze 3 einen mittleren Abschnitt 312 auf, der sich an den vorderen Abschnitt 311 anschließt und leicht schräg nach außen verläuft, um in eine erste Dichtung 81 überzugehen. An den mittleren Abschnitt 312 schließt sich ein Endabschnitt 313 an, dessen freies Ende 310 (das freie Ende der Schürze 3) eine zweite Dichtung 82 bildet.

Die Dichtungen 81 und 82 erfüllen zum einen eine Dichtfunktion, die verhindert, dass von der Rückseite des Kolbens 3 Luft oder Gas (beispielsweise bei einer Kolbenbetätigung durch Druckluft) an der zweiten Dichtung 82 vorbei gelangt. Sollte dies dennoch passieren, so wirkt die erste Dichtung 81 dahin gehend, dass sie ebenfalls gegenüber einem Eindringen von Fluid von der Rückseite zur Vorderseite des Kolbens 3 abdichtet.

Beide Dichtungen 81 und 82 sind elastisch ausgebildet bzw. elastisch gelagert und verlaufen schräg nach hinten und außen. Damit wirken auch diese Dichtungen, wenn sie von der Rückseite des Kolbens 1 her mit einem Fluid beaufschlagt werden, selbstdichtend und zugleich selbsttätig zentrierend.

Die Winkelstellung der Dichtungen 81 und 82 liegt zwischen 5° und 45°, insbesondere zwischen 10° und 30° relativ zur zentralen Achse A. Die Dichtungen können beispielsweise als Dichtlippen, als schräg nach hinten und außen verlaufende Schürzen oder Lamellen ausgebildet sein. Da die Dichtlippen 81 und 82 bei Beaufschlagung mit einem Fluid nach außen gedrückt werden, wirken sie auch als Stützlippen und verhindern ein Kippen des Kolbens 1 beim Setzen und bei der Bewegung des Kolbens 1.

Dadurch, dass die Lamellen 4 und 6 sowie die Dichtungen 81 und 82 elastisch ausgebildet sind, läuft der Kolben nach, wenn die Füllsubstanz im Bereich der Kolbenplatte 2 bzw. der Vorderseite des Kolbens einen Unterdruck oder einen Überdruck erzeugt bzw. sich ausdehnt oder zusammenzieht. Dies kann beispielsweise durch Verformen der Kartusche beim Ausbringen der Füllsubstanz oder beim Beenden des Ausbringvorgangs geschehen. Beispielsweise läuft der Kolben nach, wenn die Dichtmasse sich zusammenzieht. Wenn beispielsweise der Kolben mit einer Ausbringpistole betätigt wird, dehnt sich die komprimierte Masse wieder aus, wenn der Betätigungsdruck verringert wird. Während bei herkömmlichen Kolben dadurch Füllmasse vorne an der Kartusche ausläuft, wird der erfindungsgemäße Kolben 1 durch die sich ausdehnende Füllsubstanz nach hinten geschoben und damit ein unerwünschtes Auslaufen durch die Ausbringöffnung der Kartusche verhindert. Die Erfindung bietet damit einen nachlaufenden bzw. ausgleichenden Kolben.

Durch die hohe Elastizität der Lamellen 4, 6 und der Dichtungen 81, 82 und die damit verbundene hohe axiale Beweglichkeit des Kolbens 1 bei gleichzeitiger Stabilisierung der "Rundheit" und der Lage des Kolbens 1 in der Kartusche (Lagerstabilität) wird verhindert, dass Luft zwischen die Füllsubstanz und den Kolben 1 gezogen wird, wie dies geschehen würde, wenn der Kolben nicht beweglich genug wäre. Die Lamellen 4, 6 und die Dichtungen 81, 82 wirken somit in doppelter Funktion als Dichtungen und als Stützelemente, die verhindern, dass der Kolben kippt oder unrund wird. Außerdem ist insbesondere die zweite Dichtung 82 stabiler und Unrundheiten können ausgeglichen werden, d.h. der Kolben 1 ist "runder".

Zusätzlich zu den genannten konstruktiven Maßnahmen kann der Bereich zwischen Kolben 1 und Kartuscheninnenwand mit einem Schmiermittel versehen werden, z.B. mit Wachs, um die Beweglichkeit des Kolbens 1 weiter zu steigern. Zu diesem Zweck kann am Lamellenrand 41 der vorderen Dichtlippe 4, beispielsweise zwischen Dichtfläche 42 und dem vorderseitigen Lamellenrand 41, ein Schmiermittel-/Wachsreservoir ausgebildet sein, z.B. in Form einer vorne außen umlaufenden Rille, die durch die Kartuscheninnenwand und den Lamellenrand 41 abgegrenzt ist.

Die hinteren Dichtungen 81,82 und die hintere Lamellendichtung 61 sind vom hinteren Ende 310 weg noch vorne hin in etwa äquidistant (Abstand x) angeordnet, um ein Verkippen des Kolbens 1 sicher zu verhindern.

## Patentansprüche

1. Verschluss- und Ausdrückkolben (1) zum Einsatz in den Innenraum einer Kartusche, umfassend
eine Kolbenplatte (2) zum Kontakt mit einer in den Innenraum der Kartusche eigebrachten pastösen oder flüssigen Füllsubstanz,
eine sich an die Kolbenplatte rückseitig anschließende Schürze (3),
eine vordere Lamelle (4), die sich in einer Länge (t) von der Schürze (3) nach vorne erstreckt, um einen Zwischenraum zwischen der vorderen Lamelle (4) und einem vorderen Abschnitt (30) der Schürze (3) zu bilden, wobei die vordere Lamelle (4) eine Dichtfläche (42) zur Anlage an der Innenseite einer Wand der Kartusche aufweist, wobei die Dichtfläche (42) zum Abdichten zwischen der Innenseite der Wand der Kartusche und dem Kolben (1) elastisch an der Innenseite der Wand anliegt, um die Füllsubstanz am Durchtritt durch den Bereich zwischen der vorderen Lamelle (4) und der Innenseite der Wand zu hindern, und
wobei der Kolben (1) wenigstens eine erste hintere Dichtung (82) aufweist, die sich im Bereich eines hinteren Endes (310) der Schürze (3) erstreckt oder vom hinteren Ende (310) der Schürze (3) gebildet ist;
wobei
die erste hintere Dichtung (82) zum Abdichten zwischen der Innenseite der Wand der Kartusche elastisch an dieser anliegt, und derart ausgebildet ist, dass sie bei Beaufschlagung mit einem Fluid von der Rückseite des Kolbens (1) her selbsttätig nach außen gedrückt wird,
der Kolben (1) wenigstens eine zweite hintere Dichtung (81) aufweist, die sich vorderseitig in einem Abstand (x) vom hinteren Ende der Schürze (3) erstreckt, wobei die zweite hintere Dichtung (81) zum Abdichten zwischen der Innenseite der Wand der Kartusche elastisch an dieser anliegt, und derart ausgebildet ist, dass sie bei Beaufschlagung mit einem Fluid von der Rückseite des Kolbens (1) her selbsttätig nach außen gedrückt wird;
**dadurch gekennzeichnet, dass**
die vordere Lamelle (4) einen Lamellenrand (41) aufweist, von dem sich mehrere der Kolbenachse (A) zugewandte Vorsprünge (71) erstrecken, die nach vorne über das vordere Ende der vorderen Lamelle (4) überstehen und jeweils eine auswärts weisende, schräg rückwärts verlaufende und in den Lamellenrand (41) übergehende Rampenfläche bilden; und
die vordere Lamelle (4) derart elastisch ausgebildet und/oder gelagert ist, dass sich der Kolben (1) bei Überschreiten oder Unterschreiten eines durch Ausdehnung, Schrumpfen oder Bewegung der Füllsubstanz gebildeten Über- bzw. Unterdrucks entlang der Wand der Kartusche selbsttätig nach hinten bzw. nach vorne bewegt.

2. Verschluss- und Ausdrückkolben (1) nach Anspruch 1, **dadurch gekennzeichnet, dass** die vordere Lamelle (4) derart ausgebildet ist, dass bei Kontakt der Vorderseite des Kobens (1) mit der Füllsubstanz eine nach außen gerichtete Kraft auf die vordere Lamelle (4) ausgeübt wird.

3. Verschluss- und Ausdrückkolben (1) nach einem der vorhergehenden Ansprüche, **dadurch gekennzeichnet, dass**
der Kolben (1) wenigstens eine hintere Lamelle (6) aufweist, die sich von der Schürze (3) nach hinten erstreckt, wobei die hintere Lamelle (6) eine Dichtfläche zur Anlage an der Innenseite einer Wand der Kartusche aufweist,
wobei die Dichtfläche zum Abdichten zwischen der Innenseite der Wand der Kartusche und dem Kolben (1) elastisch an der Innenseite der Wand anliegt, um ein Fluid am Durchtritt von der rückwärtigen Seite des Kolbens (1) her zwischen der hinteren Lamelle (6) und der Innenseite der Wand zu hindern,
wobei die hintere Lamelle (6) derart ausgebildet ist, dass sie bei Beaufschlagung mit dem Fluid von der Rückseite des Kolbens (1) her selbsttätig nach außen gedrückt wird.

4. Verschluss- und Ausdrückkolben (1) nach einem der vorhergehenden Ansprüche, **dadurch gekennzeichnet, dass**
die Schürze (3) im Wesentlichen hohlzylindrisch, und/oder der Kolben (1) zum Einsetzen in einen im Wesentlichen zylindrischem Innenraum einer Kartusche ausgebildet ist.

5. Verschluss- und Ausdrückkolben nach einem der vorhergehenden Ansprüche, **dadurch gekennzeichnet, dass**
wenigstens einer der Vorsprünge (71) ein inneres Ende aufweist, das in einem Abstand von der Schürze (3) endet, um einen Zwischenraum (5) zwischen der Schürze (3) und dem Ende des Vorsprungs (71) zu bilden.

6. Verschluss- und Ausdrückkolben nach einem der vorhergehenden Ansprüche, **dadurch gekennzeichnet, dass**
ein Lamellenrand (41) der vorderen Lamelle (4) derart ausgebildet bzw. profiliert ist, dass zwischen dem Lamellenrand (41) und der Innenseite der Kartuschenwand ein Spalt entsteht, der als Reservoir für Schmiermittel vorgesehen ist.

## Claims

1. A sealing and extrusion piston (1) for use in the interior of a cartridge, comprising a piston plate (2) for contact with a pasty or liquid filling substance contained in the interior of the cartridge,
a skirt (3) adjoining the piston plate at the rear thereof,
a front lamella (4) extending forward from the skirt (3) by a length (t) to form a gap between the front lamella (4) and a front portion (30) of the skirt (3), the front lamella (4) having a sealing surface (42) for contacting the inside of a wall of the cartridge, wherein the sealing surface (42) for sealing between the inside of the wall of the cartridge and the piston (1) elastically abuts against the inside of the wall to prevent the filling substance from passing through the area between the front lamella (4) and the inside of the wall, and
wherein the piston (1) has at least a first rear seal (82) extending in the region of a rear end (310) of the skirt (3) or formed by the rear end (310) of the skirt (3);
wherein the first rear seal (82) elastically abuts against the inside of the wall of the cartridge for sealing purposes and is designed in such a way that it is automatically pressed outwards when a fluid is applied to it from the rear of the piston (1),
the piston (1) has at least one second rear seal (81) which extends at the front at a distance (x) from the rear end of the skirt (3), wherein the second rear seal (81) elastically abuts against the inside of the wall of the cartridge for sealing purposes, and is designed in such a way that it is automatically pressed outwards when a fluid is applied from the rear of the piston (1);
**characterized in that**
the front lamella (4) has a lamella edge (41) from which several projections (71) facing the piston axis (A) extend, which protrude forward beyond the front end of the front lamella (4) and each form an outwardly facing, obliquely rearwardly extending ramp surface merging into the lamella edge (41); and
the front lamella (4) is designed and/or supported in such an elastic manner that the piston (1) automatically moves backwards or forwards along the wall of the cartridge when a high pressure or low pressure generated by expansion, shrinkage or movement of the filling substance is exceeded or undercut.

2. The sealing and extrusion piston (1) according to claim 1, **characterized in that** the front lamella (4) is designed in such a way that when the front side of the piston (1) comes into contact with the filling substance, an outward force is exerted on the front lamella (4).

3. The sealing and extrusion piston (1) according to any one of the preceding claims, **characterized in that**
the piston (1) has at least one rear lamella (6) which extends rearwards from the skirt (3), wherein the rear lamella (6) has a sealing surface for contact with the inside of a wall of the cartridge,
wherein the sealing surface for sealing between the inside of the wall of the cartridge and the piston (1) elastically abuts against the inside of the wall to prevent fluid from passing from the rear side of the piston (1) between the rear lamella (6) and the inside of the wall,
wherein the rear lamella (6) is designed such that it is automatically pushed outwards when exposed to the fluid from the rear side of the piston (1).

4. The sealing and extrusion piston (1) according to any one of the preceding claims, **characterized in that**
the skirt (3) is essentially hollow cylindrical, and/or the piston (1) is designed for insertion into an essentially cylindrical interior space of a cartridge.

5. The sealing and extrusion piston according to any one of the preceding claims, **characterized in that**
at least one of the projections (71) has an inner end that ends at a distance from the skirt (3) to form a gap (5) between the skirt (3) and the end of the projection (71).

6. The sealing and extrusion piston according to any one of the preceding claims, **characterized in that**
a lamella edge (41) of the front lamella (4) is formed or profiled in such a way that a gap is formed between the lamella edge (41) and the inside of the cartridge wall, which is intended as a reservoir for lubricant.

## Revendications

1. Piston de fermeture et d'expulsion (1) destiné à être utilisé à l'intérieur d'une cartouche, comprenant
une plaque de piston (2) destinée à entrer en contact avec une substance de remplissage pâteuse ou liquide introduite à l'intérieur de la cartouche,
une jupe (3) raccordée à l'arrière de la plaque de piston,
une lamelle avant (4) s'étendant vers l'avant sur une longueur (t) à partir de la jupe (3) afin de former un espace entre la lamelle avant (4) et une partie avant (30) de la jupe (3), la lamelle avant (4) comportant une surface d'étanchéité (42) destinée à s'appuyer contre la face intérieure d'une paroi de la cartouche,
la surface d'étanchéité (42) s'appuyant de manière élastique contre la face intérieure de la paroi afin d'empêcher la substance de remplissage de passer à travers la zone située entre la lamelle avant (4) et la face interne de la paroi, et
dans lequel le piston (1) comprend au moins un premier joint arrière (82) qui s'étend dans la zone d'une extrémité arrière (310) de la jupe (3) ou qui est formé par l'extrémité arrière (310) de la jupe (3);
le premier joint arrière (82) repose de manière élastique contre la face intérieure de la paroi de la cartouche pour assurer l'étanchéité entre celles-ci, et est conçu de telle sorte qu'il est poussé automatiquement vers l'extérieur lorsqu'il est soumis à un fluide provenant de l'arrière du piston (1),
le piston (1) comporte au moins un deuxième joint arrière (81) qui s'étend à l'avant à une distance (x) de l'extrémité arrière de la jupe (3), le deuxième joint arrière (81) s'appuyant de manière élastique contre la face intérieure de la paroi de la cartouche pour assurer l'étanchéité, et est conçu de manière à être poussé automatiquement vers l'extérieur par l'arrière du piston (1) lorsqu'il est soumis à un fluide;
**caractérisé en ce que**
la lamelle avant (4) présente un bord de lamelle (41) à partir duquel s'étendent plusieurs saillies (71) tournées vers l'axe du piston (A), qui dépassent vers l'avant de l'extrémité avant de la lamelle avant (4) et forment chacune une surface en rampe tournée vers l'extérieur, s'étendant obliquement vers l'arrière et se fondant dans le bord de lamelle (41); et
la lamelle avant (4) est conçue et/ou montée de manière élastique de telle sorte que le piston (1) se déplace automatiquement vers l'arrière ou vers l'avant le long de la paroi de la cartouche lorsque la surpression ou la dépression formée par l'expansion, la contraction ou le mouvement de la substance de remplissage est dépassée ou n'est pas atteinte.

2. Piston de fermeture et d'extrusion (1) selon la revendication 1, **caractérisé en ce que** la lamelle avant (4) est conçue de telle sorte que, lorsque la face avant du piston (1) entre en contact avec la substance de remplissage, une force dirigée vers l'extérieur est exercée sur la lamelle avant (4).

3. Piston de fermeture et d'extrusion (1) selon l'une des revendications précédentes, **caractérisé en ce que**
le piston (1) comporte au moins une lamelle arrière (6) qui s'étend vers l'arrière à partir de la jupe (3), la lamelle arrière (6) présente une surface d'étanchéité destinée à s'appuyer contre la face intérieure d'une paroi de la cartouche,
la surface d'étanchéité s'appuyant de manière élastique contre la face intérieure de la paroi pour assurer l'étanchéité entre la face intérieure de la paroi de la cartouche et le piston (1), afin d'empêcher un fluide de passer de l'arrière du piston (1) entre la lamelle arrière (6) et la face interne de la paroi,
la lamelle arrière (6) étant conçue de telle sorte qu'elle est automatiquement poussée vers l'extérieur lorsqu'elle est soumise à l'action du fluide provenant de la face arrière du piston (1).

4. Piston de fermeture et d'expulsion (1) selon l'une des revendications précédentes, **caractérisé en ce que**
la jupe (3) est essentiellement cylindrique creuse et/ou le piston (1) est conçu pour être inséré dans un espace intérieur essentiellement cylindrique d'une cartouche.

5. Piston de fermeture et d'expulsion selon l'une des revendications précédentes, **caractérisé en ce que**
au moins l'une des saillies (71) présente une extrémité intérieure qui se termine à une certaine distance de la jupe (3) afin de former un espace intermédiaire (5) entre la jupe (3) et l'extrémité de la saillie (71).

6. Piston de fermeture et d'expulsion selon l'une des revendications précédentes, **caractérisé en ce que**
un bord (41) de la lamelle avant (4) est formé ou profilé de telle sorte qu'il se crée entre le bord (41) et la face intérieure de la paroi de la cartouche un interstice qui est prévu comme réservoir pour le lubrifiant.
